# FASCICULE DE BREVET EUROPEEN

(11) **EP 1 463 957 B1**
(45) Date de publication et mention de la délivrance du brevet: **18.03.2009**
(21) Numéro de dépôt: 03712223.1
(22) Date de dépôt: 09.01.2003
(51) Int. Cl.: G01S 5/00

(54) **PROCEDE ET SYSTEME POUR LOCALISER A DISTANCE UN ANIMAL DETERMINE**
VERFAHREN UND SYSTEM ZUR FERNORTUNG EINES BESTIMMTEN TIERES
METHOD AND SYSTEM FOR LOCATING A SPECIFIC ANIMAL FROM A DISTANCE

(30) Priorité: 10.01.2002 FR 0200270
(43) Date de publication de la demande: 06.10.2004
(73) Titulaire: VIRBAC S.A., F-06516 Carros (FR)
(72) Inventeur: KARST, Christian, F-06410 Biot (FR)
(74) Mandataire: Bolinches, Michel Jean-Marie
(86) Numéro de dépôt international: PCT/FR2003/000048
(87) Numéro de publication internationale: WO 2003/058273

(56) Documents cités:
- WO-A-00/79703
- WO-A-01/90771
- WO-A1-01/45037

## Description

L'invention concerne un procédé et un système pour localiser à distance un animal déterminé, en particulier un animal domestique ou de compagnie qui a été perdu par son propriétaire.

D'une manière générale, on connaît des dispositifs de repérage pour localiser à distance des engins terrestres, maritimes et aériens, sachant que de tels dispositifs trouvent également des applications pour la localisation d'animaux et/ou le suivi de leurs déplacements.

On connaît des documents de Brevet WO 0190771 et WO 0079703 des systèmes de localisation d'un animal à distance.

Le collier porté par l'animal est équipé d'un récepteur GPS et d'un émetteur qui transmet, à une station de recherche, la position du récepteur GPS et l'identité de l'animal.

Ces systèmes ne prévoient pas d'interaction entre l'animal et le récepteur GPS.

Le document de brevet US 5 850 796 décrit un système de localisation incluant un émetteur de code d'identification à un système de satellites. L'émetteur est implanté dans le corps d'un animal ou est porté par son collier. Aucun récepteur de repérage n'est prévu dans ce système et aucune interaction n'existe donc entre l'animal et sa localisation à partir de son repérage.

Cependant, notamment dans le cas des animaux, il s'avère que ces dispositifs de repérage ne sont pas aptes à résoudre de manière satisfaisante le problème de la localisation d'un animal déterminé.

Un but de l'invention est de résoudre ce problème en associant à ces dispositifs de repérage des moyens permettant de localiser un animal déterminé qui s'est notamment égaré.

A cet effet, l'invention propose un procédé pour localiser à distance un animal déterminé, ce procédé consistant à faire porter par l'animal au moins un dispositif de repérage pour déterminer les coordonnées de la position géographique de l'animal, un dispositif de communication pour transmettre ces coordonnées à une station de recherche, et une source d'énergie, procédé qui est **caractérisé en ce qu**'il consiste à faire également porter par l'animal un dispositif de lecture à distance d'un code d'identification mémorisé dans un répondeur qui est implanté dans le corps de l'animal, à faire détecter par le dispositif de lecture le code d'identification mémorisé dans le répondeur, et à utiliser le dispositif de communication porté par l'animal pour transmettre également à la station de recherche une information selon laquelle le code d'identification a été détecté, de manière à pouvoir localiser et identifier l'animal.

D'une manière générale, le procédé peut consister à déclencher un processus de localisation et d'identification à distance d'un animal à partir d'un signal émis à distance, ou bien à faire transmettre périodiquement par le dispositif de communication porté par l'animal les coordonnées de sa position géographique et l'information selon laquelle le code d'identification a été détecté.

D'une manière générale, l'information qui est transmise par le dispositif de communication selon laquelle le code d'identification a été détecté peut être le code d'identification lui-même ou bien peut consister en un signal signifiant "Code d'identification présent". Dans ce dernier cas, le procédé peut consister à comparer le code d'identification de l'animal qui est lu par le dispositif de lecture à un code d'identification préenregistré dans la mémoire d'un micromodule de contrôle de commande associé au dispositif de lecture, et à faire transmettre par le dispositif de communication le signal signifiant "Code d'identification présent" si le code d'identification qui a été détecté par le dispositif de lecture correspond au code d'identification préenregistré. Avantageusement, le procédé peut consister à activer le répondeur par un signal d'interrogation émis par le dispositif de lecture.

Selon une particularité de l'invention, le procédé peut consister à faire également transmettre par le dispositif de communication porté par l'animal des informations supplémentaires utiles comme par exemple des informations sur l'état physiologique de l'animal, sur l'environnement dans lequel se trouve l'animal, sur le niveau de charge de la source d'énergie...

Selon une autre particularité de l'invention, le procédé peut consister à déclencher un signal d'alarme ou analogue au niveau de la station de recherche lorsque le dispositif de communication porté par l'animal ne transmet plus le code d'identification de l'animal, ou lorsque le dispositif de communication porté par l'animal transmet des coordonnées de position géographique de l'animal qui tombent en dehors d'une zone prédéterminée.

Avantageusement, le procédé peut aussi consister à déclencher un signal d'alarme ou analogue au niveau de la station de recherche lorsque le dispositif de communication porté par l'animal transmet une information selon laquelle le dispositif de repérage pour déterminer les coordonnées de la position géographique de l'animal ne permet plus la détermination des coordonnées géographiques, pour cause de mal fonction par exemple.

L'invention concerne également un système de localisation à distance d'un animal déterminé pour la mise en oeuvre du procédé, ce système comprenant au moins un moyen de support porté par l'animal et qui est équipé d'au moins un dispositif de repérage des coordonnées de la position géographique de l'animal, un dispositif de communication pour transmettre ces coordonnées à une station de recherche fixe ou mobile, et une source d'énergie, système qui est **caractérisé en ce que** le moyen de support porté par l'animal est également équipé d'un dispositif de lecture à distance pour lire un code d'identification dans un répondeur implanté dans le corps de l'animal.

D'une manière générale, le dispositif de repérage peut être indifféremment constitué par un système GPS (Global Positionning System), un système "LORAN C" ou "GLONASS", un système par fréquence radio, ..., et le dispositif de communication entre l'animal et le centre de recherche peut indifféremment mettre en oeuvre une technique de communication GSM, par fréquence radio ou par satellites, ..., de tels dispositifs ne constituant que des moyens de mise en oeuvre particuliers du procédé et du système selon l'invention.

Selon une particularité de l'invention, le répondeur implanté dans le corps de l'animal est de type passif, c'est-à-dire qu'il ne comporte pas de source d'énergie propre, et il est alors avantageusement couplé de façon inductive avec le dispositif de lecture porté par l'animal qui émet un signal d'interrogation alternatif dont l'énergie est utilisé pour activer le répondeur.

Le système de mise en oeuvre du procédé selon l'invention présente notamment l'avantage de ne pas nécessiter une miniaturisation excessive puisque les dispositifs sont essentiellement portés par l'animal au moyen d'un collier ou analogue (vêtements, harnais, selles, licous, muselières,...) et donc facilement accessibles de l'extérieur pour assurer les opérations de maintenance, en particulier le rechargement de la batterie ou le changement de la pile.

Le système de mise en oeuvre du procédé peut avantageusement également comprendre des dispositifs connus pour collecter des informations sur l'état physiologique de l'animal ou sur l'environnement dans lequel il se trouve, implantables dans l'animal ou non, tels que thermomètre, cardiofréquencemètre, baromètre, hygromètre, altimètre, caméra, microphone ... ces dispositifs étant en relation par tout moyen approprié avec le dispositif de communication pour transmettre les informations à une station de recherche.

Le système de mise en oeuvre du procédé peut avantageusement aussi comprendre des dispositifs connus pour déterminer le niveau de charge de la source d'énergie, ces dispositifs étant en relation par tout moyen approprié avec le dispositif de communication pour transmettre les informations à une station de recherche.

D'autres avantages, caractéristiques et détails de l'invention ressortiront du complément de description qui va suivre en référence à des dessins annexés, donnés uniquement à titre d'exemple et dans lesquels:
- la figure 1 est une vue schématique pour illustrer le procédé selon l'invention, et
- la figure 2 représente sous la forme d'un schéma bloc un exemple d'un système de mise en oeuvre du procédé selon l'invention.

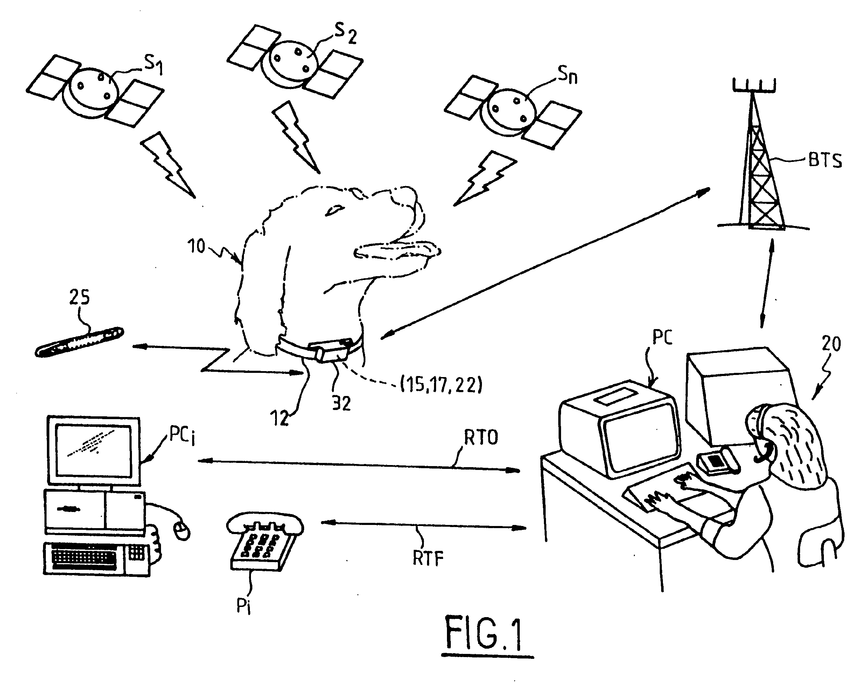

Le procédé selon l'invention pour localiser à distance un animal déterminé 10, tel un chien domestique, est illustré sur la figure 1. D'une manière usuelle, l'animal 10 porte un collier 12 qui va notamment servir de moyen de support pour au moins un dispositif de repérage 15 apte à déterminer les coordonnées de sa position géographique, et pour un dispositif de communication 17 apte à transmettre ces coordonnées à une station de recherche 20 d'animaux égarés ou perdus, cette station 20 pouvant être fixe ou mobile.

A titre d'exemple, le dispositif de repérage 15 est un système GPS qui capte les signaux émis par une pluralité de satellites S₁, S₂ ..., Sₙ qui parcourent le ciel et, à partir de ces signaux, le système calcule les coordonnées de sa position géographique et donc celles de l'animal.

A titre d'exemple, le dispositif de communication 17 est un système de téléphonie cellulaire qui comprend au moins une station de base d'émission/réception ou station BTS (Base Transceiver Station) pour établir les communications avec la station de recherche 20.

Ces dispositifs de repérage et de communication 15 et 17 vont ainsi permettre de localiser de manière précise la position de l'animal 10 mais sans pour autant identifier cet animal parmi les autres animaux qui portent un collier semblable 12.

A cet effet, on équipe également le collier 12 de l'animal 10 avec un dispositif de lecture à distance 22 d'un code d'identification I₁₀ qui a été mémorisé dans un répondeur 25 préalablement implanté dans le corps de l'animal 10.

Ainsi, le procédé selon l'invention va consister à transmettre à la station de recherche 20 non seulement les coordonnées de la position géographique de l'animal 10, mais également son identité.

La station de recherche 20 est équipée d'un poste de commande PC apte à communiquer par la station BTS avec l'ensemble des dispositifs de communication 17 des animaux dont elle assure la surveillance pour le compte de leurs propriétaires. Comme cela est également illustré sur la figure 1, la station de recherche 20 communique également avec les postes téléphoniques Pᵢ des propriétaires des animaux par un réseau de communication RTF de type fermé, le réseau téléphonique par exemple, et/ou avec les micro-ordinateur PCᵢ des propriétaires des animaux par un réseau de communication RTO de type ouvert, le réseau Internet par exemple.

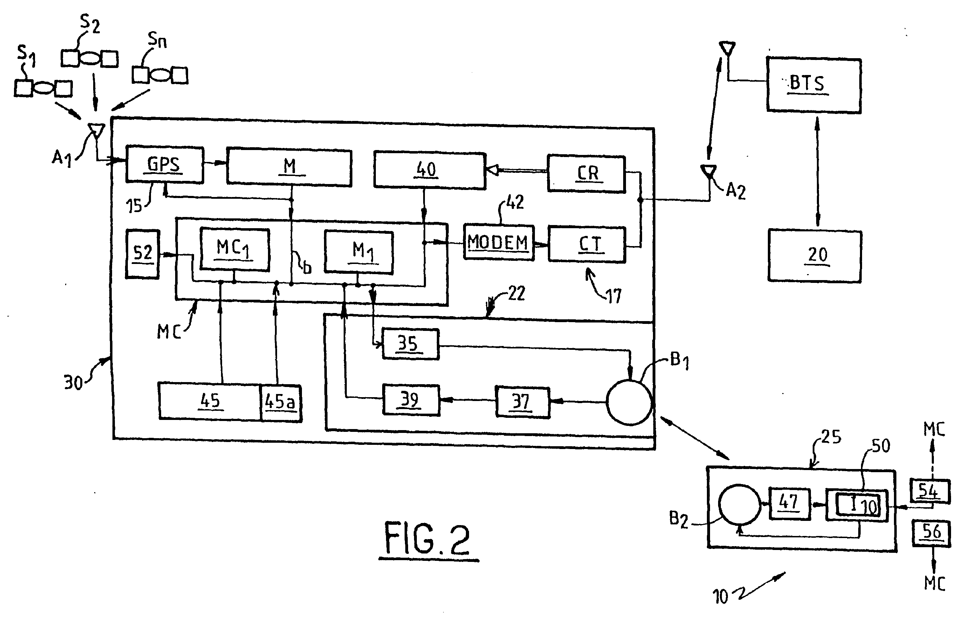

Sur la figure 2, on a illustré sous forme d'un schéma-bloc un exemple de réalisation des différents dispositifs portés par le collier 12 de l'animal 10 pour mettre en oeuvre le procédé de localisation et d'identification selon l'invention.

L'ensemble des dispositifs est monté sur une plaquette 30 par exemple qui est avantageusement logée dans un boîtier étanche 32 (figure 1) rapporté sur, ou dans, le collier 12 par tout moyen approprié.

Plus précisément, cette plaquette 30 supporte notamment:
- le dispositif de repérage 15 sous la forme d'un récepteur GPS par exemple pour capter au moyen d'une antenne A1 les signaux émis par les satellites S₁, S₂, ...et/ou Sₙ qui sont dans le champ de vision de l'antenne A₁ et qui est relié à une mémoire tampon M pour stocker de façon temporaire les coordonnées de la position géographique d'un animal 10 qui ont été calculées par le récepteur GPS ;
- le dispositif de communication 17 qui, dans le cas d'un système de téléphonie cellulaire, comprend notamment une antenne A₂ reliée à une cellule de réception CR à laquelle est assignée un numéro de téléphone propre à l'animal, et à une cellule de transmission CT dans laquelle est programmée le numéro d'appel de la station de recherche 20 ;
- le dispositif de lecture 22 qui comprend notamment une source 35 d'émission d'un signal alternatif d'interrogation et une bobine B₁ pour émettre ce signal vers le répondeur 25, des circuits analogiques 37 pour traiter le code d'identification analogique I₁₀ transmis en réponse par le répondeur 25 et capté par la bobine B₁ et des circuits logiques 39 pour convertir le code analogique sous une forme numérique ;
- des moyens de pilotage tels qu'un micromodule MC de contrôle et de commande qui comprend notamment un microprocesseur MC₁ associé à une mémoire M₁, et au moins un bus b de commande, d'adresses et de données pour le faire communiquer avec la mémoire tampon M associée au récepteur GPS, avec la cellule de réception CR par un dispositif d'activation 40 du micro-module MC d'une part, et avec la cellule de transmission CT par un modem 42 d'autre part; et
- une source d'énergie 45 telle une batterie rechargeable par exemple, pouvant éventuellement comprendre un indicateur de charge 45a.

A titre d'exemple, le répondeur 25 qui est implanté dans le corps de l'animal 10 est de type passif et comprend au moins un étage d'entrée/sortie qui est constitué par une bobine B₂ accouplée de manière inductive avec la bobine B₁ du dispositif de lecture 22, un étage intermédiaire 47 comprenant un circuit redresseur et un condensateur de stockage d'énergie, et une puce 50 à circuits intégrés où est enregistré le code d'identification I₁₀ de l'animal 10.

En se reportant aux figures 1 et 2, on va décrire les différentes étapes d'un exemple de fonctionnement normal du système. Un propriétaire qui constate l'absence de son animal domestique prend contact par téléphone avec la station de recherche 20 pour qu'elle localise son animal.

Cela suppose au préalable, que ce propriétaire s'est affilié à l'organisme qui gère la station de recherche 20 et qu'il a équipé son animal, qui porte une puce électronique implantée par son vétérinaire, d'un collier équipé de tous les dispositifs décrits précédemment. En parallèle, l'organisme met à jour un fichier dans la station de recherche pour y enregistrer toutes les informations nécessaires pour pouvoir localiser et identifier cet animal, ainsi que l'identité et les coordonnées du propriétaire.

Pour lancer la recherche d'un animal égaré, la station 20 émet un signal de recherche via la station BTS, ce signal véhiculant le numéro d'appel affecté au collier 12 de l'animal recherché. La cellule réceptrice CR du dispositif de communication 17 du collier 12 de l'animal recherché identifie ce signal de recherche qui a été capté par son antenne A₂ ce qui a pour effet de commander le dispositif d'activation 40 et d'activer le fonctionnement du micromodule MC de contrôle et de commande, en particulier le déroulement d'un programme enregistré dans la mémoire M₁ pour ordonnancer toutes les étapes nécessaires à la localisation géographique de l'animal et de son identification.

A cet effet, le micromodule MC active le fonctionnement du récepteur GPS du dispositif de repérage 15 qui, en retour, stocke dans la mémoire tampon M les coordonnées de la position géographique de l'animal à partir des signaux captés par son antenne A₁ en provenance de plusieurs des satellites situés dans le champ de vision de cette antenne A₁. En parallèle, le micromodule MC active le dispositif de lecture 22 du code d'identification I₁₀ qui est enregistré dans le répondeur 25 de l'animal et qui, en retour, le communique au micromodule MC.

Ensuite, le micromodule MC prépare un message de réponse qui est constitué des coordonnées de la position géographique de l'animal mémorisées dans la mémoire tampon M, et du code d'identification I₁₀ reçu du dispositif de lecture 22. Ce message, un fois formé, est transmis par le modem 42 à la cellule de transmission CT du dispositif de communication 15 qui compose alors le numéro d'appel de la station de recherche 20 pour lui transmettre le message par l'intermédiaire de la station BTS.

Le message de réponse transmis par le collier 12 de l'animal 10 comprenant les coordonnées géographiques de l'animal et le code d'identification est par exemple affiché sur un écran du poste de commande PC de la station de recherche 20, et un opérateur peut contacter alors le propriétaire de l'animal soit par téléphone soit par le réseau Internet pour l'informer que son animal a été localisé. Dans le cas où la station de recherche est mobile, par exemple si elle est dans un véhicule, le suivi de l'animal jusqu'à sa récupération est facilité car l'opérateur de la station de recherche peut directement aller récupérer l'animal en déterminant sa position de manière continue. Dans le cas où le message de réponse envoyé par un collier 12 n'est pas accompagné du code d'identification I₁₀, l'opérateur de la station du recherche 20 en déduit automatiquement que ce collier 12 n'est plus porté par l'animal auquel il a été affecté et que la localisation qui a été faite est celle de la position géographique du collier 12 et non celle de l'animal.

Le système selon l'invention peut être également directement activé par le propriétaire de l'animal sans passer nécessairement par la station de recherche 20. Dans ce cas, la station de recherche 20 reçoit le message de réponse transmis par le collier 12 et le propriétaire est contacté par l'opérateur qui lui indique la position de l'animal 10, ou bien le message de réponse transmis par le collier 12 arrive directement chez le propriétaire chez qui la station de recherche 10 est implantée. Le message de réponse transmis par le collier 12 peut aussi arriver directement chez un tiers, par exemple le vétérinaire chez qui la station de recherche 20 est alors implantée. L'implication d'un vétérinaire dans le réseau de géolocalisation/identification peut se justifier de par sa connaissance du statut médical (par exemple diabète) de l'animal ou du statut comportemental (animal agressif).

Il est également envisageable que le message en réponse qui est élaboré par le collier 12 de l'animal, soit complété avec des informations liées à l'environnement dans lequel se situe l'animal et ce, en disposant des capteurs sur le collier 12 tel un capteur 52 qui mesure par exemple la température ambiante, la pression atmosphérique, l'humidité de l'air, l'attitude, ..., ou qui enregistre des sons et/ou des images et dont les signaux sont transmis au micromodule MC. Par ailleurs, le message en réponse peut être également complété avec des informations sur l'état physiologique de l'animal, telles que par exemple la température corporelle ou la fréquence cardiaque, au moyen d'au moins un capteur 54 implanté ou non dans le corps de l'animal et mis en communication soit avec la puce 50 du répondeur 25, soit directement avec le micromodule MC.

On peut également envisager, s'il s'agit par exemple d'un animal potentiellement dangereux dans l'environnement dans lequel il se retrouve après avoir échappé à son propriétaire, de neutraliser cet animal égaré à l'endroit où il se trouve avant de venir le récupérer en commandant depuis la station de recherche 20, via le micromodule MC, l'injection d'un agent anesthésiant contenu par exemple dans une capsule 56 logée dans le corps de l'animal. De même, on peut envisager de commander depuis la station de recherche 20 l'émission d'un message s'affichant sur un écran situé sur la plaquette qui indique par exemple le nom et les coordonnées du propriétaire à contacter pour indiquer que l'on a retrouvé son animal.

Le système tel que décrit précédemment pour la recherche d'un animal égaré peut également être adapté pour déclencher une alarme ou analogue au niveau de la station de recherche lorsque l'animal quitte ou pénètre dans une zone déterminée, ce qui permet d'assurer une surveillance dans les déplacements de l'animal. Par exemple, le dispositif de repérage porté par l'animal peut comparer en continu, ou périodiquement, les coordonnées de sa position géographique avec des coordonnées déterminées préenregistré dans une mémoire permanente ou temporaire définissants une zone géographique particulière (les données préenregistrées dans la mémoire pouvant avoir été introduites par tout moyen approprié directement ou à distance). Si la position géographique déterminée par le dispositif de repérage 15 est en dehors de la zone géographique particulière définie, le dispositif de communication 17 émet un signal d'alarme vers la station de recherche. De même, le dispositif de communication 17 peut émettre en continu, ou périodiquement, les coordonnées de la position géographique déterminées par le dispositif de repérage 15 vers la station de recherche 20. Si ces coordonnées ne correspondent pas à une zone prédéfinies dans une mémoire de la station de recherche 20, une alarme peut alerter l'opérateur ou le propriétaire.

Le système tel que décrit précédemment pour la recherche d'un animal égaré peut aussi être adapté pour déclencher une alarme ou analogue au niveau de la station de recherche 20 lorsque le dispositif de lecture à distance 22 ne détecte plus le répondeur passif 25, ce qui signifiera que l'animal ne porte plus le collier 12. Par exemple, le dispositif de lecture 22 du code d'identification peut être activé automatiquement périodiquement et le dispositif de communication 17 peut émettre périodiquement vers la station de recherche 20 le code d'identification ou bien un signal signifiant "Code d'identification présent". Dans le cas où l'information selon laquelle le code d'identification a été détecté, c'est à dire le code d'identification ou bien un signal signifiant "Code d'identification présent", n'est plus reçu par la station de recherche 20, une alarme peut alerter l'opérateur.

De la même manière, le système tel que décrit précédemment pour la recherche d'un animal égaré peut aussi être adapté pour déclencher une alarme ou analogue au niveau de la station de recherche 20 lorsque l'état physiologique de l'animal est anormal, dans le cas où le système comprend des capteurs appropriés et où l'information est transmise en continu, ou périodiquement, à la station de recherche 20 et est comparée automatiquement à des valeurs attendues, des informations prédéterminées. Dans le cas de différences notables entre les valeurs recueillies et les valeurs attendues, une alarme peut se déclencher pour prévenir l'opérateur ou le propriétaire. Ceci permet d'assurer une surveillance de l'état de santé de l'animal.

De manière comparable, le système peut aussi être adapté pour déclencher une alarme ou analogue au niveau de la station de recherche lorsque des informations sur l'environnement dans lequel se trouve l'animal varient.

Ainsi, de manière générale, on peut éventuellement stocker dans la mémoire M₁ du micromodule MC des paramètres qui peuvent être mis à jour à partir de la station de recherche 20, en particulier pour modifier les conditions à partir desquelles une alarme peut être déclenchée. On peut ainsi faire varier le périmètre dans lequel l'animal peut se déplacer librement, par exemple.

Par ailleurs, l'indicateur de charge 45a de la source d'énergie 45 est relié au micromodule MC de manière à communiquer à la station de recherche 20, via le dispositif de communication 17, une information sur l'état de charge de la source d'énergie 45. En parallèle, l'information sur cet état de charge peut être visualisé au moyen d'un indicateur situé sur le collier de l'animal pour être directement visible de l'extérieur.

## Revendications

1. Procédé pour localiser à distance un animal déterminé, ce procédé consistant à faire porter par l'animal au moins un dispositif de repérage pour déterminer les coordonnées sur la position géographique de l'animal, un dispositif de communication pour transmettre ces coordonnées à une station de recherche, et une source d'énergie, **caractérisé en ce qu'**il consiste à faire également porter par animal un dispositif de lecture à distance d'un code d'identification mémorisé dans un répondeur qui est implanté dans le corps de l'animal, à faire détecter par le dispositif de lecture le code d'identification mémorisé dans le répondeur, et à utiliser le dispositif de communication porté par l'animal pour transmettre également à la station de recherche une information selon laquelle le code d'identification a été détecté, de manière à pouvoir localiser et identifier l'animal.

2. Procédé selon la revendication 1, **caractérisé en ce que** le répondeur implanté dans le corps de l'animal est passif.

3. Procédé selon la revendication 1 ou 2, **caractérisé en ce qu'**il consiste à activer le répondeur par un signal d'interrogation émis par le dispositif de lecture.

4. Procédé selon l'une quelconque des revendications précédentes, **caractérisé en ce que** l'information transmise à la station de recherche selon laquelle le code d'identification a été détecté est le code d'identification.

5. Procédé selon l'une quelconque des revendications précédentes, **caractérisé en ce qu'**il consiste à déclencher un processus de localisation et d'identification à distance d'un animal à partir d'un signal émis à distance.

6. Procédé selon l'une quelconque des revendications précédentes, **caractérisé en ce qu'**il consiste à faire transmettre périodiquement par le dispositif de communication porté par l'animal les coordonnées de sa position géographique et une information selon laquelle le code d'identification a été détecté.

7. Procédé selon l'une quelconque des revendications précédentes, **caractérisé en ce qu'**il consiste à déclencher un signal d'alarme ou analogue au niveau de la station de recherche lorsque le dispositif de communication porté par l'animal ne transmet pas l'information selon laquelle le code d'identification a été détecté.

8. Procédé selon l'une quelconque des revendications précédentes, **caractérisé en ce qu'**il consiste à déclencher un signal d'alarme ou analogue au niveau de la station de recherche lorsque le dispositif de communication porté par l'animal transmet des coordonnées sur la position géographique de l'animal qui tombent en dehors d'une zone prédéterminée.

9. Procédé selon l'une quelconque des revendications précédentes, **caractérisé en ce qu'**il consiste à comparer le code d'identification de l'animal lu par le dispositif de lecture à un code d'identification préenregistré dans la mémoire d'un micromodule de contrôle et de commande porté par l'animal.

10. Procédé selon l'une quelconque des revendications précédentes, **caractérisé en ce qu'**il consiste à faire également transmettre par le dispositif de communication porté par l'animal des informations sur l'état physiologique de l'animal et/ou sur l'environnement dans lequel se trouve animal.

11. Procédé selon l'une quelconque des revendications précédentes, **caractérisé en ce qu'**il consiste à déclencher un signal d'alarme ou analogue au niveau de la station de recherche lorsque le dispositif de communication porté par l'animal transmet de informations sur l'état physiologique de l'animal ne correspondant pas à des informations prédéterminées ou que la localisation de l'animal tombe en dehors d'un périmètre déterminé.

12. Procédé selon la revendication 11, **caractérisé en ce qu'**il consiste à enregistrer des informations dans la mémoire du micromodule, et à mettre à jour ces informations à partir de la station de recherche pour faire varier les conditions dans lesquelles une alarme peut être déclenchée.

13. Procédé selon l'une quelconque des revendications précédentes, **caractérisé en ce qu'**il consiste à implanter la station de recherche chez le propriétaire de l'animal ou chez un tiers.

14. Système de localisation à distance d'un animal déterminé pour la mise en oeuvre du procédé tel que défini par l'une quelconque des revendications précédentes, ce système comprenant un moyen de support (12) porté par l'animal (10) et qui est équipé d'au moins un dispositif de repérage (15) des coordonnées de la position géographique de l'animal (10), un dispositif de communication (17) pour transmettre ces coordonnées à une station de recherche (20), et une source d'énergie (45), **caractérisé en ce que** le moyen de support (12) porté par l'animal (10) est également équipé d'un dispositif de lecture à distance (22) pour lire un code d'identification (I₁₀) de l'animal qui est mémorisé dans un répondeur (25) implanté dans le corps de l'animal.

15. Système de localisation à distance d'un animal déterminé selon la revendication 14, **caractérisé en ce que** le code d'identification (I₁₀) de l'animal est mémorisé dans un répondeur passif (25) couplé de façon inductive avec le dispositif de lecture (22) porté par l'animal qui émet un signal d'interrogation alternatif dont l'énergie est utilisé pour activer le répondeur (25).

16. Système de localisation à distance d'un animal déterminé selon la revendication 14 ou 15, **caractérisé en ce que** le dispositif de repérage (15) comprend un récepteur GPS qui capte au moyen d'une antenne (A₁) les signaux émis par des satellites (S₁, S₂, ..., Sₙ).

17. Système de localisation à distance d'un animal déterminé selon l'une quelconque des revendications 14 à 16, **caractérisé en ce que** le dispositif de communication (17) est un système de téléphonie cellulaire comprenant au moins une antenne (A₂) reliée à une cellule de réception (CR) et à une cellule de transmission (CT), **en ce que** la cellule de réception (CR) est reliée à un dispositif d'activation (40) d'un micromodule de contrôle et de commande (MC) et **en ce que** la cellule de transmission (CT) est reliée au micromodule (MC) par un modem (42).

18. Système de localisation à distance d'un animal déterminé selon l'une quelconque des revendications 14 à 17, **caractérisé en ce que** le dispositif de lecture (22) comprend au moins une source (35) d'émission d'un signal d'interrogation et une bobine d'émission/réception (B₁) pour transmettre ce signal vers le répondeur (25), et des circuits analogiques (37) pour traiter le code d'identification analogique (I₁₀) capté par l'antenne (B₁) et des circuits logiques (39) pour convertir ledit code sous une forme numérique.

19. Système de localisation à distance d'un animal selon l'une quelconque des revendications 14 à 18, **caractérisé en ce que** le répondeur (25) comprend notamment une bobine (B₂) accouplée de manière inductive avec une bobine (B₁) du dispositif de lecture (22), un étage intermédiaire (47) comprenant un circuit redresseur et un condensateur de stockage d'énergie, et une puce (50) à circuits intégrés où est au moins enregistré le code d'identification (I₁₀) de l'animal.

20. Système de localisation à distance d'un animal déterminé selon l'une quelconque des revendications 14 à 19, **caractérisé en ce qu'**il comprend également au moins un dispositif (54) pour collecter des informations sur l'état physiologique de l'animal (10), et **en ce que** ledit dispositif (54) est implanté ou non dans le corps de l'animal et est relié au répondeur (25) ou à un micromodule de contrôle et de commande (MC) afin d'être transmises par le dispositif de communication (17) à la station de recherche (20).

21. Système de localisation à distance d'un animal déterminé selon l'une quelconque des revendications 14 à 20, **caractérisé en ce qu'**il comprend également au moins un dispositif (52) pour collecter des informations sur l'environnement dans lequel se trouve l'animal (10) et qui est relié à un micromodule de contrôle et de commande (MC) pour être transmises par le dispositif de communication (17) à la station de recherche (20).

22. Système de localisation à distance d'un animal déterminé selon l'une quelconque des revendications 14 à 21, **caractérisé en ce que** la source d'énergie (45) est associée à un dispositif (45a) de détermination de l'état de sa charge qui est relié à un micromodule de contrôle et de commande (MC) pour que cet état soit transmis par le dispositif de communication (17) à la station de recherche (20).

23. Système de localisation à distance selon l'une quelconque des revendications 14 à 22, **caractérisé en ce que** la station de recherche (20) est fixe ou mobile.

## Claims

1. Process of remotely locating a given animal which consists of the animal carrying at least a tracking device to determine the coordinates of the geographic position of the animal, a communication device to transmit these coordinates to a search station and an energy source, **characterised by** the fact that the animal also carries a remote reading device for an identification code stored in a transponder implanted in the body of the animal, to be detected by the remote reading device for the identification code stored in the transponder, and using the communication device carried by the animal to also transmit to the search station information according to which the identification code has been detected so as to locate and identify the animal.

2. Process according to claim 1, **characterised in that** the transponder implanted in the body of the animal is passive.

3. Process according to claim 1 or 2, **characterised in that** it consists of activating the transponder using an interrogating signal emitted by the reading device.

4. Process according to any of the previous claims, **characterised in that** the information transmitted to the search station according to which the identification code has been detected is the identification code.

5. Process according to any of the previous claims, **characterised in that** it consists of launching a process of remotely locating and identifying an animal using a remotely emitted signal.

6. Process according to any of the previous claims, **characterised in that** it consists of periodically transmitting the coordinates of its geographic position and information according to which the identification code has been detected using the communication device carried by the animal.

7. Process according to any of the previous claims, **characterised in that** it consists of sounding an alarm or similar signal at the search station when the communication device carried by the animal fails to transmit the information according to which the identification code has been detected.

8. Process according to any of the previous claims, **characterised in that** it consists of sounding an alarm or similar signal at the search station when the communication device carried by the animal transmits coordinates of the geographic position of the animal when they fall outside of a predetermined area.

9. Process according to any of the previous claims, **characterised in that** it consists of comparing the animal's identification code as read by the reading device to an identification code pre-stored in the memory of a control and command micromodule carried by the animal.

10. Process according to any of the previous claims, **characterised in that** it consists of also transmitting information on the physiological state of the animal and/or on the animal's environment using the communication device carried by the animal.

11. Process according to any of the previous claims, **characterised in that** it consists of sounding an alarm or similar signal at the search station when the communication device carried by the animal transmits information on the physiological state of the animal when this information does not correspond to predetermined information or when the animal is located outside of a given area.

12. Process according to claim 11, **characterised in that** it consists of storing information in the memory of the micromodule and updating this information from the search station in order to vary the conditions in which an alarm may be sounded.

13. Process according to any of the previous claims, **characterised in that** it consists of installing the search station with the animal's owner or with a third party.

14. System of remotely locating a given animal so as to implement the process as according to any of the previous claims, this system comprising a means of support (12) carried by the animal (10) and which is equipped with at least a tracking device (15) for the coordinates of the geographic position of the animal (10), a communication device (17) for transmitting these coordinates to a search station (20), and an energy source (45), **characterised in that** the means of support (12) carried by the animal (10) is also equipped with a remote reading device (22) for reading the animal's identification code (I₁₀) which is stored in a transponder (25) implanted in the body of the animal.

15. System of remotely locating a given animal as according to claim 14, **characterised in that** the animal's identification code (I₁₀) is stored in a passive transponder (25) inductively coupled with the reading device (22) carried by the animal which emits an alternative interrogating signal, the energy from which is used to activate the transponder (25).

16. System of remotely locating a given animal as according to claim 14 or 15, **characterised in that** the tracking device (15) includes a GPS receiver which picks up signals emitted by satellites (S₁, S₂,...Sₙ) using an antenna (A₁).

17. System of remotely locating a given animal as according to any of claims 14 to 16, **characterised in that** the communication device (17) is a cellular telephony system comprising at least an antenna (A₂) linked to a receiver cell (CR) and a transmission cell (CT), by the fact that the receiver cell (CR) is linked to a control and command micromodule (MC) activation device (40) and that the transmission cell (CT) is linked to the micromodule (MC) by a modem (42).

18. System of remotely locating a given animal as according to any of claims 14 to 17, **characterised in that** the reading device (22) comprises at least a source (35) of interrogation signal emission and an emission/reception reel (B₁) for transmitting this signal to the transponder (25), and analogic circuits (37) for processing the analogic identification code (I₁₀) picked up by the antenna (B₁) and logic circuits (39) for converting said code into numeric form.

19. System of remotely locating a given animal as according to any of claims 14 to 18, **characterised in that** the transponder (25) notably comprises a reel (B₂) inductively coupled with a reading device (22) reel (B₁), an intermediate stage (47) comprising a rectifier circuit and an energy storage condenser and an integrated circuit chip (50) where at least the animal's identification code (I₁₀) is stored.

20. System of remotely locating a given animal as according to any of claims 14 to 19, **characterised in that** it also comprises at least a device (54) for collecting information on the physiological state of the animal (10), and by the fact that said device (54) may or may not be implanted in the body of the animal and is linked to the transponder (25) or to a control and command micromodule (MC) so that it may be transmitted to the search station (20) by the communication device (17).

21. System of remotely locating a given animal as according to any of claims 14 to 20, **characterised in that** it also comprises at least a device (52) for collecting information on the animal's (10) environment and which is linked to a control and command micromodule (MC) so that it may be transmitted to the search station (20) by the communication device (17).

22. System of remotely locating a given animal as according to any of claims 14 to 21, **characterised in that** the energy source (45) is combined with a device (45a) for determining its charge level which is linked to a control and command micromodule (MC) so that this level may be transmitted to the search station (20) by the communication device (17).

23. System of remote location as according to any of claims 14 to 22, **characterised in that** the search station (20) may be fixed or mobile.

## Patentansprüche

1. Verfahren zur Fernbestimmung eines Ortes eines bestimmten Tieres, wobei das Verfahren darin besteht, dass das Tier zumindest eine Ortungsvorrichtung, um die Koordinaten der geographischen Position des Tieres zu bestimmen, eine Kommunikationsvorrichtung, die diese Koordinaten an eine Forschungsstation überträgt und eine Energiequelle trägt, **dadurch gekennzeichnet, dass** das Verfahren ebenfalls darin besteht, dass das Tier eine Fernlesevorrichtung trägt zum Lesen eines Identifizierungscodes, der in einem Antwortgerät gespeichert ist, welches in dem Körper des Tieres implantiert ist, dass der in dem Antwortgerät gespeicherte Identifizierungscode durch die Lesevorrichtung detektiert wird und dass die Kommunikationsvorrichtung, welche von dem Tier getragen wird, verwendet wird, um an die Forschungsstation ebenso eine Information zu übertragen, dass der Identifizierungscode detektiert wurde, um das Tier lokalisieren und identifizieren zu könnnen.

2. Verfahren nach Anspruch 1, **dadurch gekennzeichnet, dass** das im Körper des Tieres implantierte Antwortgerät passiv ist.

3. Verfahren nach Anspruch 1 oder 2, **dadurch gekennzeichnet, dass** es darin besteht, das Antwortgerät durch ein Abfragesignal zu aktivieren, das von der Lesevorrichtung ausgesendet wird.

4. Verfahren nach einem der vorstehenden Ansprüche, **dadurch gekennzeichnet, dass** die Information, die an die Forschungsstation übertragen wird, dass der Identifizierungscode detektiert wurde, der Identifizierungscode ist.

5. Verfahren nach einem der vorstehenden Ansprüche, **dadurch gekennzeichnet, dass** es darin besteht, einen Fernlokalisierungs- und Identifizierungsprozess eines Tieres anhand eines Signals auszulösen, das aus der Distanz ausgesendet wird.

6. Verfahren nach einem der vorstehenden Ansprüche, **dadurch gekennzeichnet, dass** es darin besteht, durch die Kommunikationsvorrichtung, die von dem Tier getragen wird, periodisch die Koordinaten der geographischen Position zu übertragen sowie eine Information, dass der Identifizierungscode detektiert wurde.

7. Verfahren nach einem der vorstehenden Ansprüche, **dadurch gekennzeichnet, dass** es darin besteht, ein Alarmsignal oder ähnliches Signal bei der Forschungsstation auszulösen wenn die von dem Tier getragene Kommunikationsvorrichtung nicht die Information überträgt, dass der Identifizierungscode detektiert wurde.

8. Verfahren nach einem der vorstehenden Ansprüche, **dadurch gekennzeichnet, dass** es darin besteht, ein Alarmsignal oder ähnliches Signal bei der Forschungsstation auszulösen, wenn die von dem Tier getragene Kommunikationsvorrichtung Koordinaten einer geographischen Position des Tieres überträgt, die außerhalb einer vorbestimmten Zone liegen.

9. Verfahren nach einem der vorstehenden Ansprüche, **dadurch gekennzeichnet, dass** es darin besteht, den Identifizierungscode des Tieres, der von der Lesevorrichtung gelesen wurde, mit einem voreingetragenen Identifizierungscode zu vergleichen, der in einen Speicher eines Steuer- und Befehlsmikromoduls voreingespeichert ist, das von dem Tier getragen wird.

10. Verfahren nach einem der vorstehenden Ansprüche, **dadurch gekennzeichnet, dass** es darin besteht, ebenfalls über die von dem Tier getragene Kommunikationsvorrichtung Informationen über den physiologischen Zustand des Tieres und/oder über die Umgebung, in der sich das Tier befindet, zu übertragen.

11. Verfahren nach einem der vorstehenden Ansprüche, **dadurch gekennzeichnet, dass** es darin besteht, ein Alarmsignal oder ähnliches Signal bei der Forschungsstation auszulösen, wenn die von dem Tier getragene Kommunikationsvorrichtung Informationen über den physiologischen Zustand des Tieres überträgt, die nicht vorbestimmten Informationen entsprechen oder wenn die Ortsbestimmung des Tieres außerhalb eines bestimmten Umkreises liegt.

12. Verfahren nach Anspruch 11, **dadurch gekennzeichnet, dass** es darin besteht, Informationen über den Speicher des Mikromoduls zu speichern und diese Informationen von der Forschungsstation aus zu erneuern, um die Bedingungen abzuändern, bei denen ein Alarm ausgelöst werden kann.

13. Verfahren nach einem der vorstehenden Ansprüche, **dadurch gekennzeichnet, dass** es darin besteht, die Forschungsstation bei dem Inhaber des Tieres oder bei einem Dritten aufzustellen.

14. System zur Fernbestimmung eines Ortes eines bestimmten Tieres, das zur Durchführung eines Verfahrens nach einem der vorstehenden Ansprüche ausgebildet ist, wobei das System ein Trägerelement (12) aufweist, das von dem Tier (10) getragen wird und das zumindest mit einer Ortungsvorrichtung für die Koordinaten der geographischen Position des Tieres (10), mit einer Kommunikationsvorrichtung (17) zur Übertragung der Koordinaten an eine Forschungsstation (20) und mit einer Energiequelle (45) ausgestattet ist, **dadurch gekennzeichnet, dass** das von dem Tier (10) getragene Trägerelement (12) ebenso mit einer Fernlesevorrichtung (22) ausgestattet ist, die einen Identifizierungscode (I₁₀) des Tieres liest, der in einem Antwortgerät gespeichert ist, das im Körper des Tieres implantiert ist.

15. System zur Fernbestimmung eines Ortes eines bestimmten Tieres nach Anspruch 14, **dadurch gekennzeichnet, dass** der Identifizierungscode (I₁₀) des Tieres in einem passiven Antwortgerät gespeichert ist, das induktiv mit dem Lesegerät gekoppelt ist, das von dem Tier getragen wird und das ein wechselndes Abfragesignal aussendet, dessen Energie verwendet wird, um das Antwortgerät (25) zu aktivieren.

16. System zur Fernbestimmung eines Ortes eines bestimmten Tieres nach Anspruch 14 oder 15, **dadurch gekennzeichnet, dass** die Ortungsvorrichtung einen GPS-Empfänger aufweist die er mit Hilfe einer Antenne (A₁), die von den Satelliten (S₁,S₂, ..., Sₙ) ausgesendeten Signale empfängt.

17. System zur Fernbestimmung eines Ortes eines bestimmten Tieres nach einem der Ansprüche 14 bis 16, **dadurch gekennzeichnet, dass** die Kommunikationsvorrichtung ein Mobilfunksystem ist, das zumindest eine Antenne (A₂) aufweist, die mit einer Empfangszelle (CR) und mit einer Übertragungszelle (CT) verbunden ist, wobei die Empfangszelle (CR) mit einer Aktivierungsvorrichtung (40) eines Steuer- und Befehlsmikromoduls verbunden ist, wobei die Übertragungszelle (CT) durch ein Modem (42) mit dem Mikromodul (MC) verbunden ist.

18. System zur Fernbestimmung eines Ortes eines bestimmten Tieres nach einem der Ansprüche 14 bis 17, **dadurch gekennzeichnet, dass** die Lesevorrichtung zumindest eine Emissionsquelle (35) zum Aussenden eines Abfragesignals und eine Emissions-/Empfangsspule (B₁) aufweist, um dieses Signal an das Antwortgerät (25) zu schicken, sowie analoge Schaltungen (37) um den analogen Identifizierungscode (I₁₀), der von der Antenne (B₁) empfangen wurde, zu bearbeiten, und logische Schaltungen (39), um den Code in eine digitale Form umzuwandeln.

19. System zur Fernbestimmung eines Ortes eines bestimmten Tieres nach einem der Ansprüche 14 bis 18, **dadurch gekennzeichnet, dass** das Antwortgerät insbesondere eine Spule (B₂), die induktiv mit einer Spule (B₁) des Lesegeräts (22) koppelt, eine Zwischenstufe (47), die eine Gleichrichterschaltung und einen Kondensator für die Speicherung von Energie aufweist, und ein Chip mit integrierten Schaltungen aufweist, wo zumindest der Identifizierungscode (I₁₀) des Tieres gespeichert ist.

20. System zur Fernbestimmung eines Ortes eines bestimmten Tieres nach einem der Ansprüche 14 bis 19, **dadurch gekennzeichnet, dass** es weiterhin zumindest eine Vorrichtung (54) aufweist, die Informationen über den physiologischen Zustand des Tieres (10) sammelt und dass die Vorrichtung (54) im Körper des Tieres implantiert ist oder nicht und an das Antwortgerät oder an ein Steuer- und Befehlsmikromodul (MC) angeschlossen ist, um durch die Kommunikationsvorrichtung (17) an die Forschungsstation (20) übertragen zu werden.

21. System zur Fernbestimmung eines Ortes eines bestimmten Tieres nach einem der Ansprüche 14 bis 20, **dadurch gekennzeichnet, dass** es weiterhin zumindest eine Vorrichtung (52) aufweist, um Informationen über die Umgebung zu sammeln, in dem sich das Tier befindet, die an ein Steuer- Befehlsmikromodul (MC) angeschlossen ist, damit sie durch die Kommunikationsvorrichtung (17) an die Forschungsstation (20) übertragen werden.

22. System zur Fernbestimmung eines Ortes eines bestimmten Tieres nach einem der Ansprüche 14 bis 21, **dadurch gekennzeichnet, dass** die Energiequelle (45) mit einer Vorrichtung (45a) zur Bestimmung des Ladungszustandes verbunden ist, die an ein Steuer- und Befehlsmikromodul angeschlossen ist, damit dieser Zustand durch die Kommunikationsvorrichtung (17) an die Forschungsstation (20) übertragen wird.

23. System zur Fernbestimmung eines Ortes eines bestimmten Tieres nach einem der Ansprüche 14 bis 22, **dadurch gekennzeichnet, dass** die Forschungsstation (20) fest oder mobil ist.
